## Europäisches Patentamt

## European Patent Office

## Office européen des brevets

(19)

(11) Veröffentlichungsnummer: **0 096 344**

**B1**

(12) **EUROPÄISCHE PATENTSCHRIFT**

(45) Veröffentlichungstag der Patentschrift:
03.09.86

(51) Int. Cl.⁴: **B 23 D 47/04**

(21) Anmeldenummer: **83105390.5**

(22) Anmeldetag: **31.05.83**

(54) Sägemaschine.

(30) Priorität: **04.06.82 DE 3221154**

(43) Veröffentlichungstag der Anmeldung:
**21.12.83 Patentblatt 83/51**

(45) Bekanntmachung des Hinweises auf die Patenterteilung:
**03.09.86 Patentblatt 86/36**

(84) Benannte Vertragsstaaten:
**CH FR GB IT LI**

(56) Entgegenhaltungen:
**DE-A-2 431 967**
**DE-A-2 912 662**
**DE-A-2 921 194**
**DE-B-2 421 718**
**GB-A-2 018 673**

(73) Patentinhaber: **Gustav Wagner Maschinenfabrik, Opfersteinstrasse 11, D-7410 Reutlingen (DE)**

(72) Erfinder: **Der Erfinder hat auf seine Nennung verzichtet**

(74) Vertreter: **Reinländer & Bernhardt Patentanwälte, Orthstrasse 12, D-8000 München 60 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Sägemaschine, insbesondere Kaltkreissägemaschine, nach dem Oberbegriff des Anspruchs 1.

Bei einer solchen bekannten Sägemaschine ist der zweite Greiferbacken fest an dem Körper des Herkstückgreifers angebracht und ist auf der Fluchtlinie des festen Spannbackens der Werkstückspannung angeordnet.

Die der Spannung der Sägemaschine zugeführten Werkstücke, wie Profile, Rohre, Stäbe, weichen mindestens im Rahmen zulässiger Toleranzen von der theoretischen Formgenauigkeit ab, d.h. ihre Längsachsen sind z.B. bogenförmig oder quadratische Querschnitte sind rhombisch. Die Auflage der Werkstücke auf dem zugehörigen Rollgang erfolgt im allgemeinen ohne Rücksicht auf die Lage und Größe dieser Toleranzen.

Es können somit bogenförmig gewalzte Werkstücke so auf den Rollgang aufgelegt werden, daß der vom Werkstück gebildete Bogen zum zweiten Greiferspannbacken offen ist.

In diesem Fall entstehen bei größeren Abweichungen von der theoretischen Längsachse Schwierigkeiten beim Einführen der Werkstücke in die Werkstückspannung der Säge, weil das willkürlich auf den Rollgang aufgelegte und vom Werkstückgreifer gefaßte Material aufgrund seiner gekrümmten Längsachse gegen die feste Spannbacke der Werkstückspannung geführt werden und an dieser anschlagen und dann nicht in die Spannung eingebracht werden kann. Weitere Schwierigkeiten entstehen bei gekrümmter Längsachse, weil der Sägeschnitt nicht lotrecht zur Längsachse erfolgen kann.

Bekannt ist eine Werkstückklemm- und -vorschubeinrichtung für Schneidmaschinen, die eine feststehende und eine bewegliche Klemmbacke aufweist (DE-A 29 12 662). Hierbei ist die feststehende Klemmbacke in Richtung auf die bewegliche Klemmbacke mittels eines Hydraulikzylinders vor- und zurückbewegbar.

Die Aufgabe der Erfindung besteht darin, eine Sägemaschine nach dem Oberbegriff des Anspruchs 1 zu schaffen, in deren Werkstückspannung auch Werkstücke mit Maßabweichungen leicht eingeführt werden können, die durch die Art der Formabweichung infolge ihrer Lage auf dem Rollgang sonst Schwierigkeiten bereiten. Weiter soll erreicht werden, daß das Werkstück optimal ausgerichtet und Sägeschnitte durchgeführt werden, welche nahezu lotrecht zur jeweiligen Längsachse eines jeden Abschnitts liegen. Schließlich soll die Länge des Werkstückrestes innerhalb des Greiferrücklaufhubs ermittelt werden.

Gelöst wird diese Aufgabe durch die Merkmale des Anspruchs 1. Weiterbildungen der Erfindung sind in den Unteransprüchen angegeben.

Durch die erfindungsgemäße Ausbildung wird erreicht daß die Kante des zweiten Greiferbackens so weit nach innen geschwenkt werden kann, daß die Fluchtlinie des Greiferbackens vor der Fluchtlinie des festen Spannbackens der Werkstückspannung liegt, wodurch das Werkstück auf dem der Zuführung zur Werkstückspannung dienenden Rollgang so weit nach innen zu liegen kommt, daß das nach außen gekrümmte vordere Ende des Werkstücks nicht an den festen Spannbacken der Werkstückspannung anschlägt, und weiter daß über eine Reststückklappe, die beim Werkstückgreiferrücklauf die Werkstückstange abtastet, der Greiferbackenlüfthub gesteuert wird, um einen kurzen Spannhub zu erzielen.

Die Erfindung wird beispielhaft anhand der Zeichnung erläutert, in der sind

Fig. 1 eine schematische Draufsicht der Sägemaschine der Erfindung, Fig. 2 eine Seitenansicht der Sägemaschine, welche den Werkstückgreifer verdeutlicht,

Fig. 3 eine vergrößerte Teildraufsicht des zweiten Greiferbackens und

Fig. 4 und 5 Draufsichten der Sägemaschine mit Reststückklappe und Ausschieber.

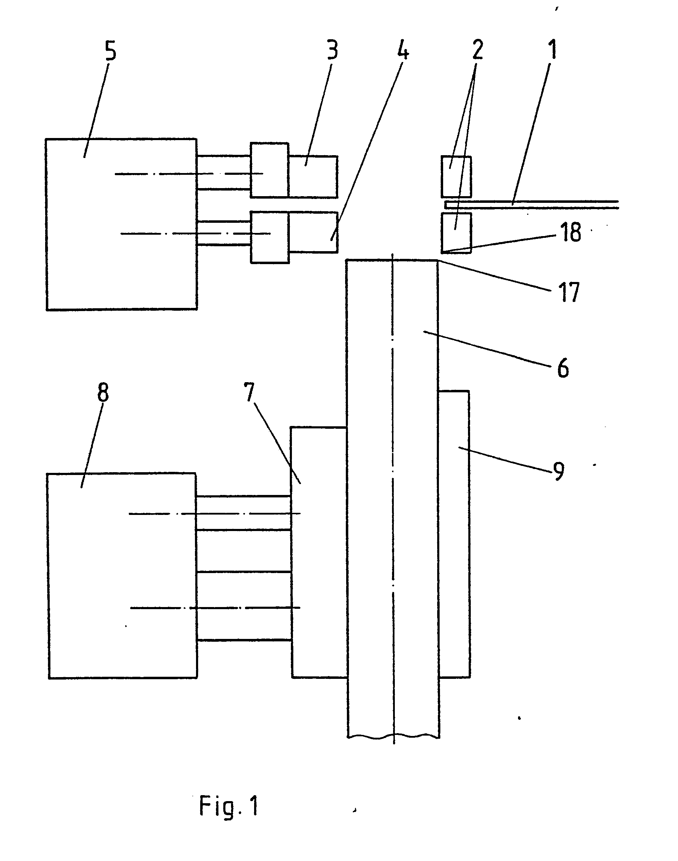

Gemäß Fig 1 ist die Sägemaschine mit einem Kreissageblatt 1 und mit einer Werkstückspannung versehen, die aus einem festen Spannbacken 2 den das Sägeblatt 1 durchdringt, und bewegbaren Spannbacken 3 und 4, die durch eine Hydraulikeinrichtung 5 quer verschiebbar sind, besteht. Das Werkstück 6 wird der Werkstückspannung mittels des Werkstückgreifers zugeführt, der aus einem ersten Greiferbacken 7, der durch eine Hydraulikeinrichtung 8 quer zur Zuführeinrichtung des Werkstücks 6 verschiebbar ist, und aus einer zweiten Spannbacke 9, die schwenkbar ist, besteht.

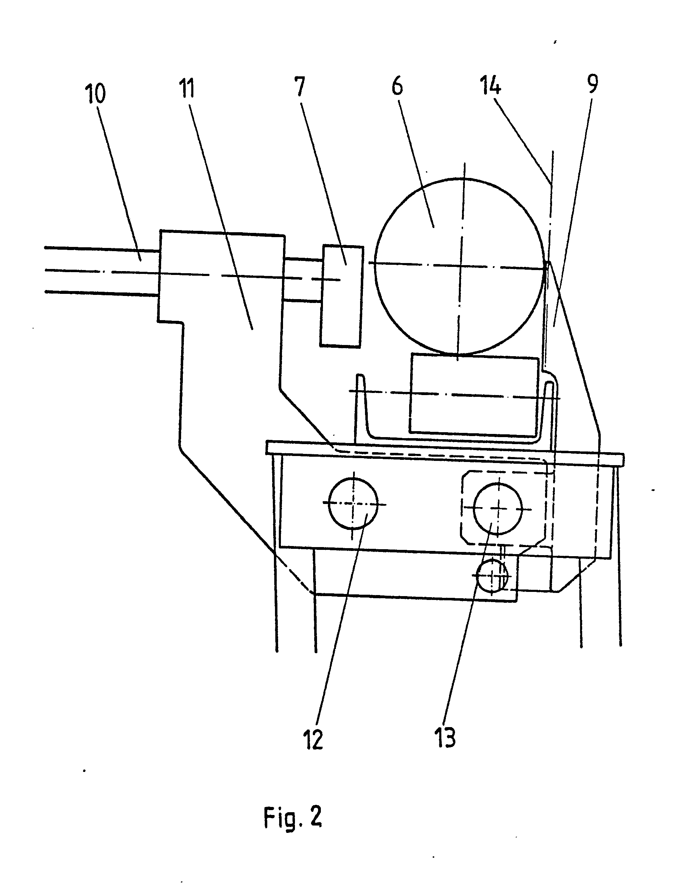

Gemäß Fig. 2 ist der erste Greiferbacken 7 mittels einer Schubstange 10 in dem Körper 11 des Werkstückgreifers gelagert. Der Körper 11 des Werkstückgreifers ist längs zweier Rundführungen 12 und 13 geführt. Die zweite Spannbacke 9 ist schwenkbar um die Rundführung 13 gelagert, wodurch der Greiferbacken so weit eingeschwenkt wird, daß er gemäß Fig. 2 links von der Fluchtlinie 14 des festen Spannbackens 2 der Werkstückspannung zu stehen kommt. Fig. 2 zeigt insofern die Stellung des schwenkbaren Greiferbackens 9, aus der das Werkstück nach dem Spannen durch den Greiferbacken 7 in die Werkstückspannung transportiert wird.

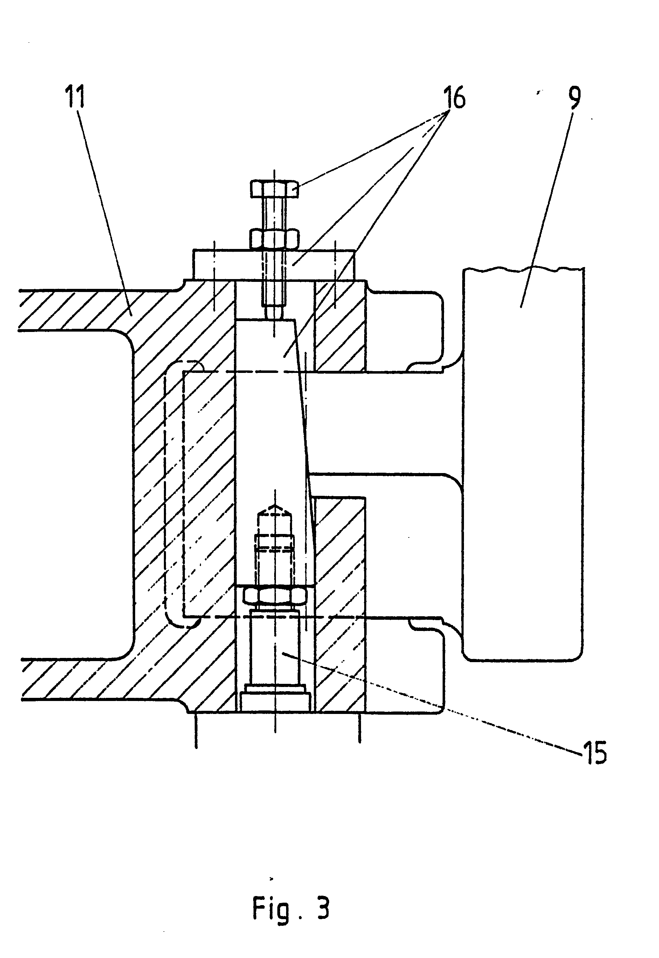

Gemäß Fig. 3 wird der schwenkbare Greiferbacken 9 durch einen Hydraulikzylinder 15 geschwenkt. Zum Einjustieren des Greiferbackens 9 dient die mechanische Nachstellung 16.

Die erfindungsgemäße Ausbildung stellt sicher, daß das Werkstück 6 immer in die Werkstückspannung 2, 3 leicht eingeführt werden kann, d.h. daß die eine Kante 17 des vorderen Endes des Werkstücks 6 nicht an die Kante 18 des festen Spannbackens 2 anschlägt, siehe Fig. 1, selbst wenn das Werkstück 6 gekrümmt ist.

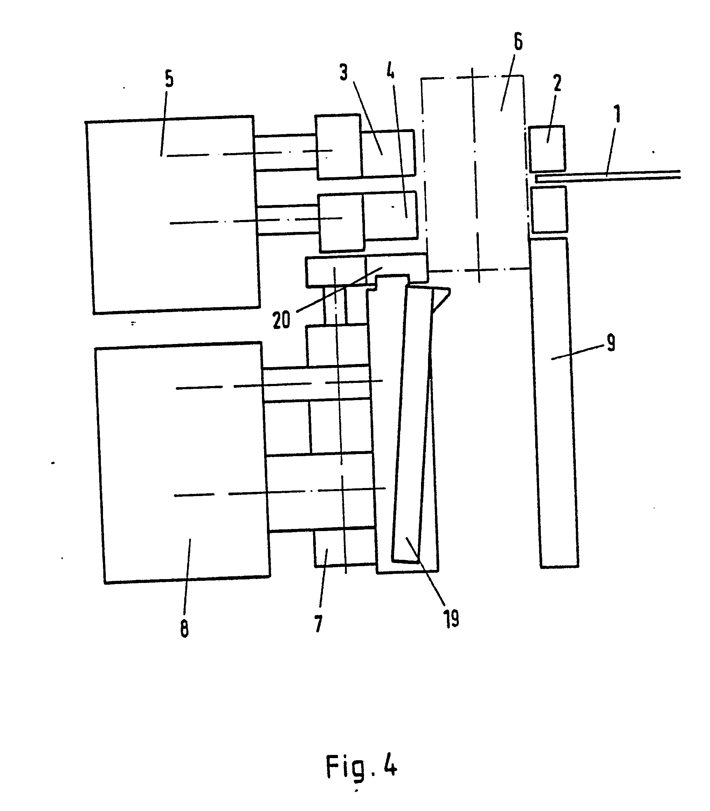

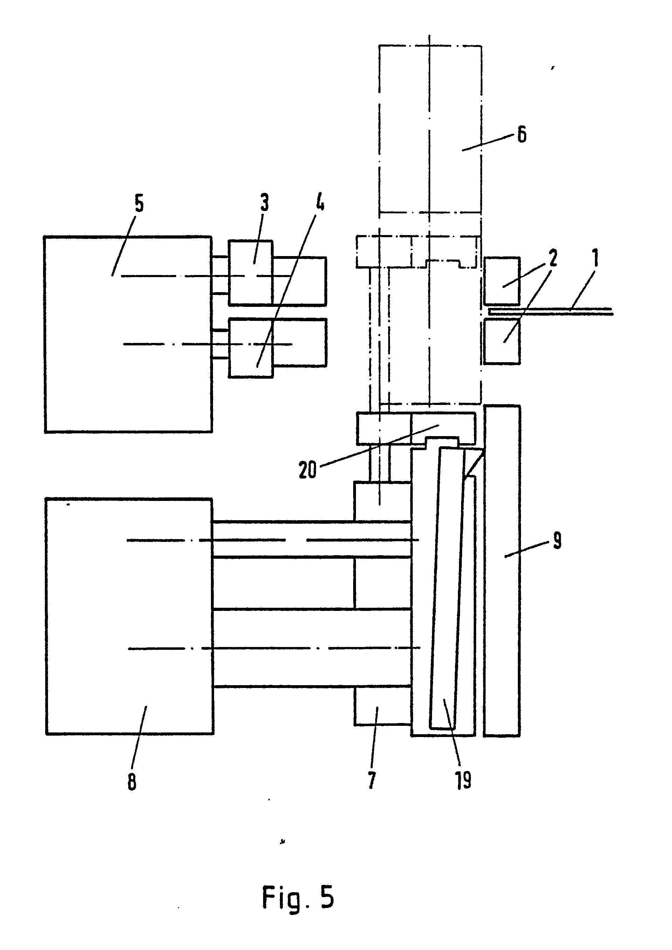

Gemäß Fig. 4 und 5 ist an dem ersten Greiferbacken 7 eine schwenkbare Reststückklappe 19 gelagert, welche das Ende des stangenförmigen Werkstücks 6 abtastet. Durch die Reststückklappe 19 kann auch die Länge des Werkstückrests innerhalb des Greiferrücklaufhubs ermittelt werden. An dem ersten Greiferbacken 7 ist des weiteren eine Ausschiebeeinrichtung 20 angebracht, welche die Restabschnitte des Werkstücks 6 aus den Spannbacken 2, 3 und 4 der Werkstückspannung herausschiebt. Damit kann ein automatischer Stangenquerschnittwechsel erfolgen.

**Patentansprüche**

1. Sägemaschine, insbesondere Kaltkreissägemaschine, mit einer Werkstückspannung und mit einem Werkstückgreifer zum Greifen und zum Zuführen von Profilmaterial zur Werkstückspannung, wobei der Werkstückgreifer einen quer zur Zuführrichtung verschiebbaren Greiferbacken und einen diesem gegenüberliegenden zweiten Greiferbacken aufweist, dadurch gekennzeichnet, daß der zweite Greiferbacken (9) um eine in Zuführrichtung verlaufende Achse schwenkbar ist und daß über eine Reststückklappe (19), die beim Werkstückgreiferrücklauf die Werkstückstange abtastet und somit das Werkstückstangenende bzw. das maschinenbedingte Werkstückreststück erkennt, der Greiferbackenlüfthub gesteuert wird, um einen kurzen Spannhub zu erzielen.

2. Sägemaschine nach Anspruch 1 mit zwei Rundführungen für den Werkstückgreifer, dadurch gekennzeichnet, daß der zweite Greiferbacken (9) um eine Rundführung (13) schwenkbar ist.

3. Sägemaschine nach Anspruch 1 oder 2, dadurch gekennzeichnet, daß der zweite Greiferbacken (9) durch einen Hydraulikzylinder (15) bewegbar ist.

4. Sägemaschine nach einem der Ansprüche 1 bis 3, dadurch gekennzeichnet, daß der zweite Greiferbacken (9) mit einer mechanischen Nachstellung (16) versehen ist.

5. Sägemaschine nach einem der Ansprüche 1 bis 4, gekennzeichnet durch eine Ausschiebeeinrichtung (20), über welche die Werkstückreststücke aus der Werkstückspannung (2, 3, 4) geschoben werden.

**Claims**

1. Sawing machine, in particular cold circular sawing machine, having a means for clamping the workpiece and a device for gripping the workpiece and for supplying sectional material to the means for clamping the workpiece, wherein the device for gripping the workpiece contains a gripping jaw slidable transversely to the supply direction and a second gripping jaw arranged opposite to the first one, characterized in that the second gripping jaw (9) is swiveling around an axis passing in the supply direction, and that the lifting stroke of the gripping jaws is controlled via a shutter (19) for rest pieces which scans the workpiece rod during the return travel of the device for gripping the workpiece and thus recognizes the end of the workpiece rod or the rest piece of the workpiece determined by the machine, in order to obtain a short clamping stroke.

2. Sawing machine according to claim 1 with two circular guides for the the device for gripping the workpiece, characterized in that the second gripping jaw (9) is swiveling around one circular guide (13).

3. Sawing machine according to claim 1 or 2, characterized in that the second gripping jaw (9) is movable by a hydraulic cylinder.

4. Sawing machine according to one of the claims 1 to 3, characterized in that the second gripping jaw (9) is provided with a mechanical adjustment device (16).

5. Sawing machine according to one of the claims 1 to 4, characterized by an ejecting means (20), by which the rest pieces of the workpiece are pushed out of the means for clamping the workpiece (2, 3, 4).

**Revendications**

1. Machine à scier, notamment scie circulaire à froid, avec un dispositif de serrage de la pièce et une griffe d'avance de la pièce pour saisir le matériau profilé à scier et l'amener au dispositif de serrage de la pièce, ladite griffe comportant une première mâchoire de griffe (7) déplaçable perpendiculairement à la direction d'amenée de ladite pièce et une seconde mâchoire de griffe (9) disposée en face de la première, caractérisée en ce que la seconde mâchoire de griffe (9) peut pivoter autour d'un axe orienté dans la direction d'amenée, et que la course d'écartement des mâchoires de griffe est commandée par un palpeur pivotant (19) qui glisse le long de la pièce à scier (6) pendant la course de retour de la griffe d'avance de la pièce et détecte ainsi l'extrémité de cette pièce ou de la chute produite par la machine à scier, pour obtenir une course de serrage courte.

2. Machine à scier selon la revendication 1, avec deux guides à section droite circulaire pour la griffe d'avance de la pièce, caractérisée en ce que la seconde mâchoire de griffe (9) peut pivoter autour d'un de ces guides (13).

3. Machine à scier selon la revendication 1 ou 2, caractérisée en ce que la seconde mâchoire de griffe (9) peut être déplacée par un vérin hydraulique (15).

4. Machine à scier selon l'une des revendications précédentes, caractérisée en ce que la seconde mâchoire de griffe (9) est munie d'un dispositif de réglage mécanique (16).

5. Machine à scier selon l'une des revendications précédentes, caractérisée en ce qu'un dispositif d'éjection (20) est prévu pour pousser la chute de la pièce à scier (6) à l'extérieur du dispositif de serrage de la pièce (2, 3, 4).

Fig. 1

Fig. 2

Fig . 3

Fig. 4

Fig. 5